# EUROPEAN PATENT SPECIFICATION

(11) **EP 1 864 872 B1**
(45) Date of publication and mention of the grant of the patent: **29.02.2012**
(21) Application number: 07109510.3
(22) Date of filing: 04.06.2007
(51) Int. Cl.: B60R 22/20

(54) **Seat belt position adjuster and seat belt device including the same**
Anschnallgurtpositionsanpasser und Anschnallgurtvorrichtung damit
Régleur de position de ceinture de sécurité et dispositif de ceinture de sécurité doté de celui-ci

(30) Priority: 07.06.2006 JP 2006158577
(43) Date of publication of application: 12.12.2007
(73) Proprietor: TAKATA CORPORATION, Minato-ku, Tokyo 106-8510 (JP)
(72) Inventor: Tabata, Yuki,c/o Takata Corporation, Tokyo 106-8510 (JP); Nagayoshi, Yukio, c/o Takata Corporation, Tokyo 106-8510 (JP); Iwai, Masahiko, c/o Takata Corporation, Tokyo 106-8510 (JP)
(74) Representative: Vossius & Partner

(56) References cited:
- JP-A- 1 127 434
- JP-A- 2005 132 229
- US-A1- 2005 173 916
- US-B1- 6 312 014

## Description

The present invention relates to a seat belt position adjuster for use in a seat belt device used in a vehicle to adjust the position of a seat belt, and to a seat belt device including the adjuster.

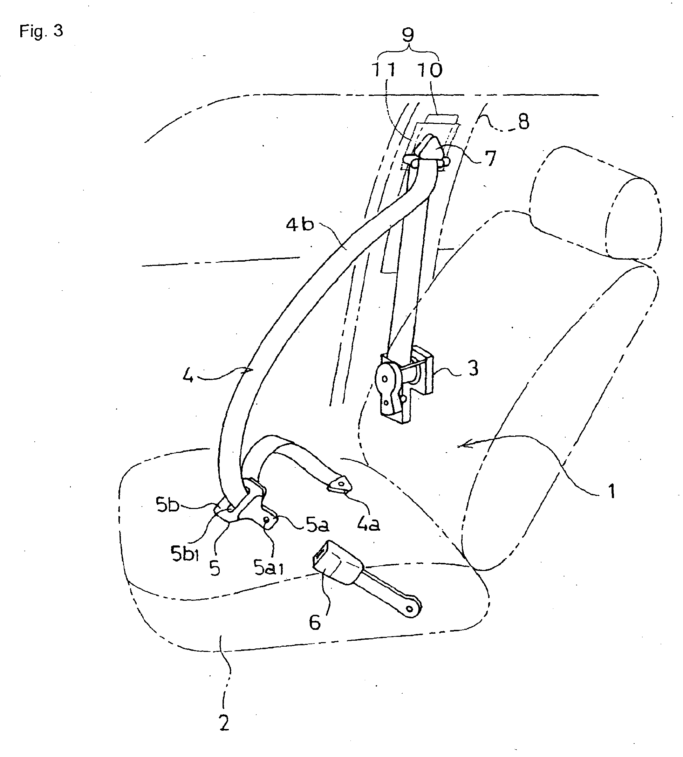

A seat belt device mounted on a vehicle, such as an automobile, for example, is for restraining and protecting an occupant from being inertially moved when the vehicle is applied with a large deceleration in the event of a vehicle collision or the like. Conventionally, as one of such seat belt devices, there is a three-point seat belt device, as illustrated in Fig. 3, for example. In the figure, the reference numeral 1 indicates a seat belt device attached to a vehicle seat 2, and the reference numeral 3 indicates a seat belt retractor fixed to a vehicle body in the vicinity of the vehicle seat 2 to keep a seat belt 4 withdrawably retracted in a normal state and to prevent the seat belt 4 from being withdrawn in the event of an emergency. The reference numeral 5 indicates a tongue slidably supported by the seat belt 4, and the reference numeral 6 indicates a buckle fixed to the vehicle seat 2 or the vehicle body to be latched with the tongue 5. The reference numeral 7 indicates a belt anchor (alternatively referred to as a shoulder anchor) attached to an upper position of a side portion of the vehicle body such as a center pillar 8, to guide the seat belt 4 withdrawn from the seat belt retractor 3. The reference numeral 9 indicates a seat belt position adjuster for adjusting the height position of the belt anchor 7. A leading end portion 4a of the seat belt 4 withdrawn from the seat belt retractor 3 is fixed to the vehicle seat 2 or the vehicle body. Further, Fig. 3 illustrates a state in which the seat belt 4 is withdrawn from the seat belt retractor 3 by a predetermined length, although the tongue 5 is not latched in the buckle 6.

According to the thus configured seat belt device 1, when the occupant wears the seat belt 4, the occupant sits on the vehicle seat 2, withdraws the seat belt 4 from the seat belt retractor 3, latches the tongue 5 in the buckle 6, and thereafter releases his hands from the tongue 5. Thereby, the seat belt 4 is applied to the occupant, with an unnecessarily withdrawn portion of the seat belt 4 retracted by the seat belt retractor 3 to remove a slack of the seat belt 4.

It is desirable to apply the seat belt 4 to the occupant at a position fitted as properly as possible to the occupant to effectively restrain the occupant in the event of an emergency and allow the occupant to feel comfortable in the vehicle without having a feeling of pressure and the like when the occupant normally sitting in the vehicle, for example. In particular, a shoulder belt 4b for supporting an area from a shoulder across the chest to the abdomen of the occupant is required to be applied to the occupant at a further fitted position. Meanwhile, the occupant includes a child and an adult, and the adult includes a large-built person and a small-built person, for example. Thus, the occupant has a different and varied physical size. In view of this, the seat belt device I conventionally includes the seat belt position adjuster 9, which makes the position of the seat belt 4 adjustable so that the seat belt 4 can be applied to each of occupants of different and varied physical sizes at a position fitted as comfortably as possible to the occupant.

Generally, the conventional seat belt position adjuster 9 of the above type includes at least a guide rail 10 provided at an upper position of the side portion of the vehicle body such as the center pillar 8, to extend in the height direction (the vertical direction), and a slider 11 slidably provided to the guide rail 10 to swingably support the belt anchor 7 which guides the seat belt 4 withdrawn from the seat belt retractor 3.

Then, to adjust the height position of the belt anchor 7 to a desired height position, a not-illustrated operation button provided to the slider 11 is operated to pull a latch pin (not illustrated) out of one of positioning holes (not illustrated) of the guide rail 10. Thereafter, the slider 11 is vertically moved toward the desired height position, and the latch pin is inserted in and engaged with the positioning hole of the guide rail 10 corresponding to or closest to the desired height position. Thereby, the height position of the belt anchor 7 is adjusted to the height position desired by the occupant, and the seat belt 4 is applied to the occupant at the fitted position.

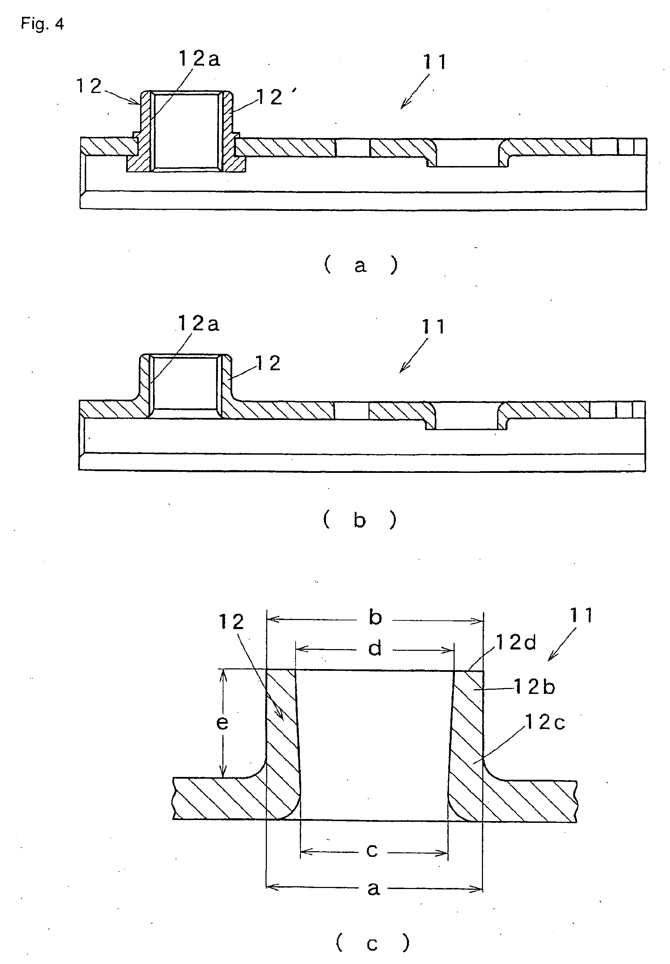

Meanwhile, the slider 11 is formed with a boss portion to support the belt anchor 7. As illustrated in Fig. 4(a), as the boss portion, there has conventionally been a boss portion 12 having a boss member 12', which includes an internal thread 12a and is formed separately from and fixed to the slider 11. However, the use of such a separately formed boss member 12' causes a problem of an increase in the weight and also an increase in the number of components and thus an increase in the number of manufacturing processes.

In light of this, there has been proposed a slider 11 of the seat belt position adjuster 9 having a boss portion 12 which is integrally formed with the slider 11 by a burring process, as illustrated in Fig. 4(b), to thereby reduce the weight and to reduce the number of components and the number of manufacturing processes (see JP-B-7-71920 and JP-A-2004-106720, for example).

Conventionally, in the formation of the boss portion 12 by the burring process, the boss portion 12 is processed in many cases by employing a die including a processing hole having a constant inner diameter in the longitudinal direction thereof, and a punch having a constant outer diameter in the longitudinal direction thereof. During the burring process, a leading end portion 12b of the boss portion 12 is first stretched and pressed into the processing hole of the die. Thus, as illustrated in Fig. 4(c), the outer diameter of the boss portion 12 formed by the burring process is constant, with an outer diameter a of a base portion 12c of the boss portion 12 being equal to an outer diameter b of a leading end 12d (a=b). Further, the inner diameter of the boss portion 12 changes to continuously increase from the base portion 12c toward the leading end 12d, and a difference in inner diameter is caused, with an inner diameter d of the leading end 12d being greater than an inner diameter c of the base portion 12c (d>c). Due to the difference in inner diameter, the base portion 12c of the boss portion 12 is formed to have a greater wall thickness than the wall thickness of the leading end portion 12b of the boss portion 12.

To firmly support the belt anchor 7, the length of the effective internal thread 12a needs to be increased in Fig. 4(b). In other words, a height (amount of protrusion) e of the boss portion 12 needs to be increased by a certain degree in Fig. 4(c). If the height e of the boss portion 12 is thus simply increased in the burring process, however, thread cutting with a tap cannot be effectively performed, since the inner diameter of the boss portion 12 continuously and significantly changes from the base portion 12c toward the leading end 12d, as described above. As a result, it becomes difficult to form the effective internal thread 12a. Thus, in the formation of the boss portion 12 by the burring process with the use of the die including a processing hole having a constant inner diameter and the punch having a constant outer diameter, the height e of the boss portion 12 cannot be increased much. Therefore, there is a problem in that the length of the effective internal thread 12a cannot be increased much. The same is true of thread cuttings other than the thread cutting with a tap.

Another example for a seat belt position adjuster is known from JP 2005132229.

The present invention has been made in view of the above circumferences, and an object of the present invention is to provide a seat belt position adjuster which, even if a boss portion of a slider for supporting a belt anchor is formed by a burring process, can make the height of the boss portion greater than the height of a conventional boss portion and prevent a difference in inner diameter of the boss portion, and to provide a seat belt device including the adjuster.

To solve the above-described problems, a seat belt position adjuster according to the invention of Claim 1 includes at least a guide rail attached to a vehicle body, and a slider slidably provided to the guide rail to swingably support a belt anchor which guides a seat belt. The slider includes a boss portion integrally formed with the slider, obtained by a burring process and supporting the belt anchor, and slides with respect to the guide rail to adjust the position of the seat belt. The seat belt position adjuster is characterized in that the boss portion is configured such that the inner diameter of the boss portion is kept constant between a base portion and a leading end portion of the boss portion, and that the outer diameter of the boss portion is continuously reduced from the base portion toward a leading end of the boss portion.

Further, a seat belt device according to the invention of Claim 2 includes at least a seat belt retractor for keeping a seat belt withdrawably retracted in a normal state and preventing the seat belt from being withdrawn in the event of an emergency, a tongue slidably supported by the seat belt, a buckle fixed to a vehicle seat or a vehicle body to be latched with the tongue, a belt anchor attached to the vehicle body to guide the seat belt withdrawn from the seat belt retractor, and a seat belt position adjuster for adjusting the position of the belt anchor. The seat belt position adjuster is used to adjust the position of the belt anchor to thereby adjust the position of the seat belt with respect to an occupant. The seat belt device is characterized in that the seat belt position adjuster is the seat belt position adjuster described in Claim 1.

According to the thus configured seat belt position adjuster of the present invention, the boss portion formed by the burring process is kept constant in inner diameter without having a difference in inner diameter. Thus, the height (the amount of protrusion) of the boss portion can be made greater than the height of a conventional boss portion. Accordingly, it is possible to effectively perform the thread cutting on the boss portion by using a tap, and to form an effective internal thread longer than a conventional internal thread. Due to the increase in length of the effective internal thread, therefore, the support of the belt anchor can be more firmly maintained.

Further, according to the seat belt device of the present invention, which includes the seat belt position adjuster of the present invention, the support of the belt anchor can be more firmly maintained. Accordingly, the occupant can be more effectively restrained and protected from being inertially moved when a vehicle is applied with a large deceleration in the event of a vehicle collision or the like.
The best mode for carrying out the present invention will be described below with reference to the drawings.
Fig. 1 illustrates a guide rail and a slider of an embodiment of a seat belt position adjuster according to the present invention, with Fig. 1(a) being a perspective view and Fig. 1(b) being a cross-sectional view along the IB-IB line of Fig. 1(a);
Fig. 2 illustrates the slider of the embodiment illustrated in Fig. 1, with Fig. 2(a) being a cross-sectional view of the slider in the longitudinal direction thereof and Fig. 2(b) being an explanatory diagram of a boss portion formed by a burring process;
Fig. 3 is a diagram illustrating a commonly-used conventional three-point seat belt device installed in an automobile; and
Fig. 4 illustrates sliders used in a conventional seat belt position adjuster, with Figs. 4(a) being a cross-sectional view of a slider according to an embodiment, 4(b) being a cross-sectional view of a slider according to another embodiment, and 4(c) being an explanatory diagram of a boss portion of the slider illustrated in Fig. 4(b) formed by a burring process.

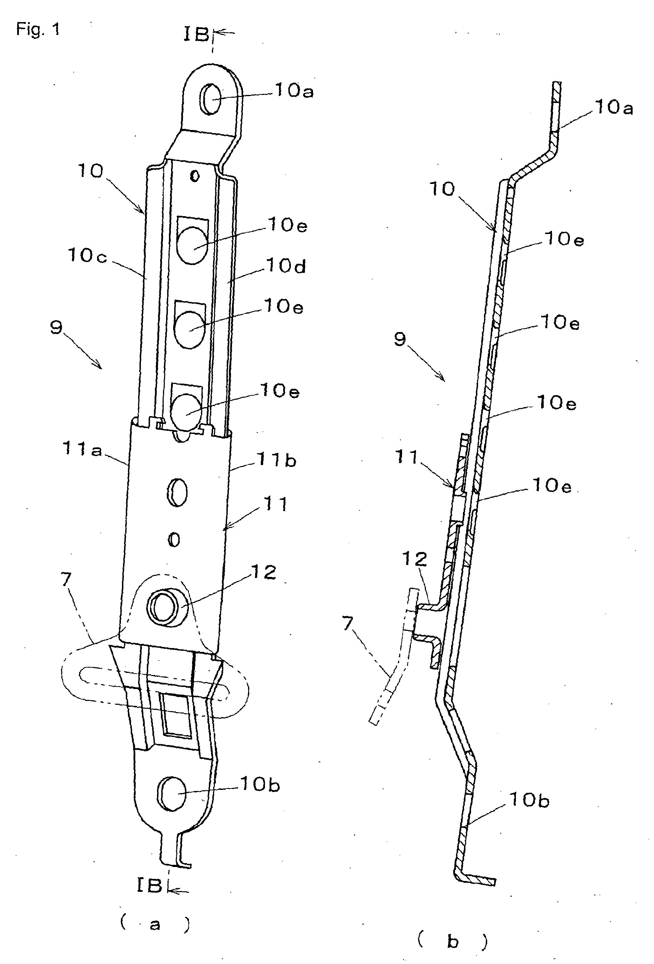

Fig. 1 illustrates a guide rail and a slider of an embodiment of a seat belt position adjuster according to the present invention. Fig. 1(a) is a perspective view, and Fig. 1(b) is a cross-sectional view along the IB-IB line of Fig. 1(a). The same components as the components of the above-described conventional example are assigned with the same reference numerals, and detailed description thereof will be omitted.

As illustrated in Figs. 1(a) and 1(b), the seat belt position adjuster 9 of the present embodiment also includes the guide rail 10 and the slider 11. The guide rail 10 extends in the vertical direction (the height direction), and is disposed at an upper position of the side portion of the vehicle body, such as the center pillar 8. The guide rail 10 is attached by passing not-illustrated bolts through attachment holes 10a and 10b formed in upper and lower ends of the guide rail 10 and screwing the bolts into the side portion of the vehicle body.

The left and right side edges of the guide rail 10 are provided with rail portions 10c and 10d, respectively, which extend in the vertical direction. Further, the center of the guide rail 10 is drilled with a predetermined number of positioning holes 10e at predetermined intervals in the vertical direction.

The slider 11 is provided to also extend in the vertical direction. The left and right side edges of the slider 11 are bent to form guided portions 11a and 11b. The guided portions 11a and 11b slidably engage with the rail portions 10c and 10d of the guide rail 10, respectively, to vertically move while being guided by the rail portions 10c and 10d.

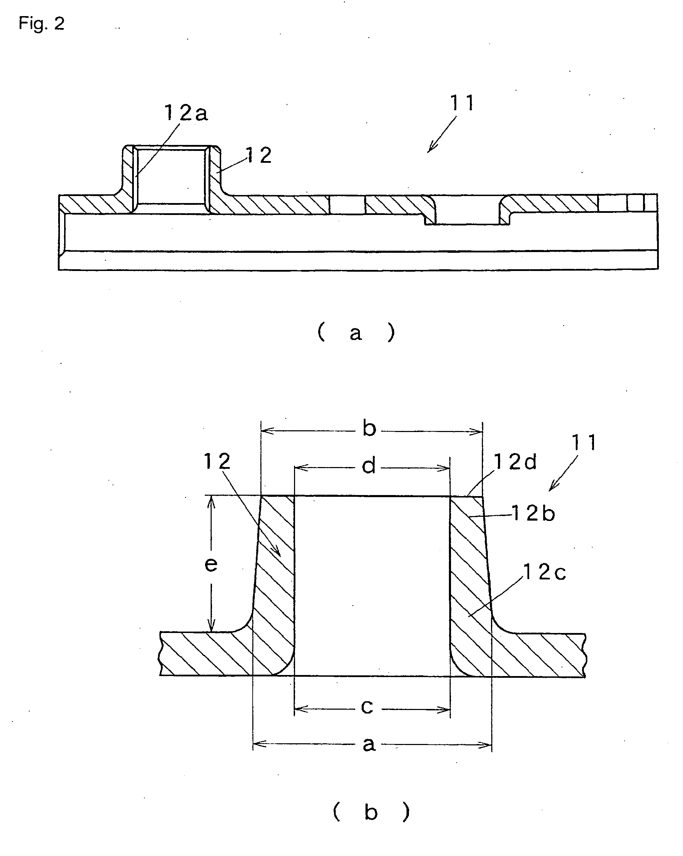

As illustrated in Fig. 1(a), similarly to the conventional slider 11, the slider 11 of the present embodiment is also provided with the boss portion 12, which protrudes from the slider 11 to swingably support the belt anchor 7. As illustrated in Fig. 2(a), the boss portion 12 is integrally formed with the slider 11 by the burring process, and the inner circumferential surface of the boss portion 12 is formed with the internal thread 12a. As illustrated in Fig. 2(b), the outer diameter b of the leading end 12d of the boss portion 12 is smaller than the outer diameter a of the base portion 12c of the boss portion 12 (b<a). Meanwhile, the inner diameter d of the leading end 12d of the boss portion 12 is equal to the inner diameter c of the base portion 12c of the boss portion 12 (c=d). That is, while the outer diameter of the boss portion 12 changes to be reduced from the base portion 12c toward the leading end 12d, the inner diameter of the boss portion 12 is kept constant without changing from the base portion 12c toward the leading end 12d. Thus, the boss portion 12 does not have a difference in inner diameter.

In the boss portion 12 of the present embodiment, therefore, similarly to the above-described conventional example, the leading end portion 12b of the boss portion 12 is thinner than the base portion 1 2c due to the burring process. However, the inner diameters c and d of the boss portion 12 are constant and equal to each other, as described above. Thus, as illustrated in Fig. 2(b), there arises a difference in outer diameter between the outer diameter b at the leading end 12d of the boss portion 12 and the outer diameter a at the base portion 12c, i.e., the outer diameter b of the leading end 12d is smaller than the outer diameter a of the base portion 12c (b<a).

According to the seat belt position adjuster 9 of the present embodiment, the boss portion 12 formed by the burring process is kept constant in inner diameter without having a difference in inner diameter. Therefore, a height (amount of protrusion) e of the boss portion 12 can be made greater than the height of the conventional boss portion. Accordingly, it is possible to effectively perform the thread cutting on the boss portion 12 by using a tap, and to form the effective internal thread 12a longer than a conventional internal thread. Due to the increase in length of the effective internal thread 12a, therefore, the support of the belt anchor 7 can be more firmly maintained.

Other configurations and other operations and effects of the seat belt position adjuster 9 of the present embodiment are the same as the configurations and the operations and effects of the commonly-used conventional seat belt position adjuster provided with the slider 11 as illustrated in Fig. 4(b) including the boss portion 12 formed by the burring process.

Further, the seat belt position adjuster 9 of the present embodiment can be applied to the seat belt position adjuster 9 of the commonly-used conventional three-point seat belt device 1 illustrated in Fig. 3, for example. Provided with the seat belt position adjuster 9 of the present embodiment, the seat-belt device 1 can more firmly maintain the support of the belt anchor 7 and more effectively restrain and protect an occupant from being inertially moved when a vehicle is applied with a large deceleration in the event of a vehicle collision or the like.

### [Industrial Applicability]

The seat belt position adjuster according to the present invention and the seat belt device including the adjuster can be preferably applied to a seat belt position adjuster for adjusting the height position of a seat belt of a seat belt device used in a vehicle, and to a seat belt device including the adjuster.

## Claims

1. A seat belt position adjuster comprising at least:
a guide rail (10) attached to a vehicle body; and
a slider (11) slidably provided to the guide rail (10) to swingably support a belt anchor (7) which guides a seat belt (4), the slider (11) including a boss portion (12) which is integrally formed with the slider (11), obtained by a burring process, and supports the belt anchor (7), and sliding with respect to the guide rail (10) to adjust the position of the seat belt (4),
the seat belt position adjuster being **characterized in that** the boss portion (12) is configured such that the inner diameter of the boss portion (12) is kept constant between a base portion (12c) and a leading end portion (12b) of the boss portion (12), and that the outer diameter of the boss portion (12) is continuously reduced from the base portion (12c) toward a leading end (12d) of the boss portion (12).

2. A seat belt device comprising at least:
a seat belt retractor (3) for keeping a seat belt (4) withdrawably retracted in a normal state and preventing the seat belt (4) from being withdrawn in the event of an emergency;
a tongue (5) slidably supported by the seat belt (4);
a buckle (6) fixed to a vehicle seat (2) or a vehicle body to be latched with the tongue (5);
a belt anchor (7) attached to the vehicle body to guide the seat belt (4) withdrawn from the seat belt retractor (3); and
a seat belt position adjuster (9) for adjusting the position of the belt anchor (7), the seat belt position adjuster (9) used to adjust the position of the belt anchor (7) to thereby adjust the position of the seat belt (4) with respect to an occupant,
the seat belt device being **characterized in that** the seat belt position adjuster (9) is the seat belt position adjuster (9) described in Claim 1.

## Patentansprüche

1. Sitzgurtpositionseinsteller mit mindestens:
einer an der Fahrzeugkarosserie befestigten Führungsschiene (10); und
einem verschiebbar an der Führungsschiene (10) angeordneten Schieber (11) zum schwenkbaren Halten einer den Sitzgurt (4) führenden Gurtbefestigung (7), wobei der Schieber (11) einen Nabenabschnitt (12) aufweist, der einstichig mit dem Schieber (11) ausgebildet ist, durch ein Kragenziehverfahren erhalten wird und die Gurtbefestigung (7) hält, und bezüglich der Führungsschiene (10) zum Einstellen der Position des Sitzgurtes (4) verschiebbar ist,
wobei der Sitzgurtpositionseinsteller **dadurch gekennzeichnet ist, dass** der Nabenabschnitt (12) so ausgebildet ist, dass der Innendurchmesser des Nabenabschnitts (12) zwischen einem Basisabschnitt (12c) und einem vorderen Endabschnitt (12b) des Nabenabschnitts (12) konstant gehalten wird und der Außendurchmesser des Nabenabschnitts (12) vom Basisabschnitt (12c) hin zum vorderen Endabschnitt (12b) des Nabenabschnitts (12) gleichmäßig abnimmt.

2. Sitzgurtvorrichtung mit mindestens:
einem Gurtsstraffer (3), der den Sitzgurt (4) im Normalzustand herausziehbar zurückgezogen hält und den Sitzgurt (4) im Notfall daran hindert, herausgezogen zu werden;
einer vom Sitzgurt (4) verschiebbar gehaltenen Zunge (5);
einer an einem Fahrzeugsitz (2) oder einer Fahrzeugkarosserie befestigten, mit der Zunge (5) einzurastenden Gurtschnalle (6);
einer an Fahrzeugkarosserie angeordneten Gurtbefestigung (7) zum Führen des vom Gurtstraffer (3) zurückgezogenen Sitzgurtes (4); und
einem Sitzgurtpositionseinsteller (9) zum Einstellen der Position der Gurtbefestigung (7), wobei der Sitzgurtpositionseinsteller (9) zum Einstellen der Position der Gurtbefestigung (7) verwendet wird, um **dadurch** die Position des Sitzgurtes bezüglich des Fahrzeuginsassen einzustellen,
wobei die Sitzgurtvorrichtung **dadurch gekennzeichnet ist, dass** sie den Sitzgurtpositionseinsteller (9) nach Anspruch 1 aufweist.

## Revendications

1. Dispositif de réglage de la position d'une ceinture de sécurité, comprenant au moines :
un rail de guidage (10) fixé à une caisse de véhicule ; et
un coulisseau (11) prévu de manière à pouvoir glisser sur le rail de guidage (10) pour supporter de manière oscillante un ancrage de ceinture (7) guidant une ceinture de sécurité (4), le coulisseau (11) comportant une partie en bossage (12) formée d'un seul tenant avec le coulisseau (11), obtenue par soyage et supportant l'ancrage de ceinture (7), et coulissant relativement au rail de guidage (10) pour régler la position de la ceinture de sécurité (4),
ledit dispositif de réglage de la position d'une ceinture de sécurité étant **caractérisé en ce que** la partie en bossage (12) est prévue de telle manière que le diamètre intérieur de la partie en bossage (12) est maintenu constant entre une partie de base (12c) et une partie d'extrémité de guidage (12b) de la partie en bossage (12), et **en ce que** le diamètre extérieur de la partie en bossage (12) diminue de manière continue de la partie de base (12c) à une extrémité de guidage (12b) de ladite partie en bossage (12).

2. Dispositif de ceinture de sécurité, comprenant au moins :
un enrouleur (3) de ceinture de sécurité pour maintenir une ceinture de sécurité (4) tendue de manière amovible dans un état normal et empêcher la ceinture de sécurité (4) d'être relâchée en cas d'urgence ;
une languette (5) supportée de manière à pouvoir glisser sur la ceinture de sécurité (4) ;
une boucle (6) fixée sur un siège de véhicule (2) ou une caisse de véhicule pour verrouiller la languette (5) ;
un ancrage de ceinture (7) fixé sur la caisse de véhicule pour guider la ceinture de sécurité (4) déroulée de l'enrouleur (3) de ceinture de sécurité ; et
un dispositif (9) de réglage de la position d'une ceinture de sécurité pour ajuster la position de l'ancrage de ceinture (7), ledit dispositif (9) de réglage de la position d'une ceinture de sécurité servant à régler la position de l'ancrage de ceinture (7) pour régler ainsi la position de la ceinture de sécurité (4) par rapport à un passager,
ledit dispositif de ceinture de sécurité étant **caractérisé en ce que** le dispositif (9) de réglage de la position d'une ceinture de sécurité est le dispositif (9) de réglage de la position d'une ceinture de sécurité décrit en revendication 1.
